# EUROPÄISCHE PATENTSCHRIFT

(11) **EP 3 124 323 B1**
(45) Veröffentlichungstag und Bekanntmachung des Hinweises auf die Patenterteilung: **13.12.2017**
(21) Anmeldenummer: 16001443.7
(22) Anmeldetag: 28.06.2016
(51) Int. Cl.: B60N 2/56, A47C 7/74, B60H 1/24, A47C 21/04, B60N 2/70

(54) **BELÜFTUNGSEINHEIT FÜR EINEN FAHRZEUGSITZ**
VENTILATION UNIT FOR A VEHICLE SEAT
UNITE DE VENTILATION DE SIEGE DE VEHICULE

(30) Priorität: 28.07.2015 DE 202015005265 U
(43) Veröffentlichungstag der Anmeldung: 01.02.2017
(73) Patentinhaber: I.G. Bauerhin GmbH, 63584 Gründau (DE)
(72) Erfinder: Bauer, Stefan, 63755 Alzenau (DE)
(74) Vertreter: Grimm, Ekkehard

(56) Entgegenhaltungen:
- EP-A1- 2 826 663
- DE-A1-102007 017 000
- US-A1- 2006 087 160
- US-A1- 2011 109 128

## Beschreibung

Die vorliegende Erfindung betrifft eine Belüftungseinheit für einen Fahrzeugsitz gemäß dem Oberbegriff des Anspruchs 1.

Eine solche Belüftungseinheit umfasst eine Luftverteilungsschicht, die zumindest auf der einen Seite durch eine Deckschicht abgedeckt ist. Diese Luftverteilungsschicht steht zum einen mit einer zu belüftenden Fläche und zum anderen mit einer Lüftereinheit in Verbindung. Die Lüftereinheit, die einen Lüfter und ein Lüftergehäuse umfasst, führt entweder Luft einer zu belüftenden Fläche zu oder saugt sie von dieser ab. Die Lüftereinheit wird durch ein zweiteiliges Adapterelement, das ein erstes Adapterteil und ein zweites Adapterteil aufweist, gehalten. Dieses Adapterelement bildet auch die Strömungsverbindung zwischen Luftverteilungsschicht und Lüftereinheit. Das Adapterelement ist mit Teilen einer Sitzgestellfederstruktur verbunden.

Die DE 10 2007 017 000 A1 beschreibt einen Luftströmungsverbinder zur Verwendung in einem Fahrzeugsitz-Luftleitsystem. Dieser Luftströmungsverbinder besitzt einen ersten Abschnitt und einen zweiten Abschnitt, die miteinander verbunden sind. Mit dem ersten Abschnitt wird eine Luftaufbereitungsvorrichtung, beispielsweise eine thermoelektrische Vorrichtung, um Luft zu erwärmen oder zu kühlen, verbunden, während der zweite Abschnitt mit einer Luftverteilungseinrichtung, die einem Sitzkissen zugeordnet ist, verbunden wird. Ein Teil des zweiten Abschnitts ist als Faltenbalg ausgebildet, um Bewegungen des Sitzkissens, die sich auf die Luftverteilungseinrichtung und damit auf den Luftströmungsverbinder übertragen, auszugleichen. Der Luftströmungsverbinder, bei dem der erste Abschnitt und der zweite Abschnitt auch aus einem Teil bestehen können, wird über den ersten Abschnitt und daran angeordneten Klammern mit einem Sitzrahmen des Sitzes verbunden und daran gehalten, indem die Klammern direkt in Teile des Sitzrahmens eingreifen.

Die DE 10 2006 004 465 A1 beschreibt ein Einlegerteil für einen belüfteten Fahrzeugsitz zum Anordnen oberhalb einer einem Insassen zugewandten Seite eines Sitz- oder Lehnenkissens, mit mindestens einer luftdurchlässigen, oberen Decklage, einer darunterliegenden, dreidimensionalen Luftverteilungsschicht und mindestens einer unteren Decklage, die mindestens einen Lufteinlass umfasst. An dem mindestens einen Lufteinlass ist eine ringförmige Komponente mit drei Abschnitten angeordnet, wobei der erste Abschnitt einen Flansch umfasst, mit dem die Komponente gehalten ist. Der dritte Abschnitt bildet eine Lüfteraufnahme und der zweite, mittlere Abschnitt bildet eine den ersten und den dritten Abschnitt entkoppelnde Struktur.

Der vorliegenden Erfindung liegt unter anderem die Aufgabe zugrunde, eine Belüftungseinheit so auszubilden, dass sie den Anforderungen in einem Fahrzeugsitz gerecht wird, insbesondere einfach zu montieren ist.

Gelöst wird diese Aufgabe durch eine Belüftungseinheit mit den Merkmalen des Anspruchs 1. Vorteilhafte Ausgestaltungen der Belüftungseinheit ergeben sich aus den abhängigen Ansprüchen.

Die erfindungsgemäße Belüftungseinheit, die die eingangs angegebenen Merkmale aufweist, zeichnet sich dadurch aus, dass das erste Adapterteil des Adapterelements eine Flanschplatte umfasst, die zwischen der Luftverteilungsschicht und der Deckschicht angeordnet ist. Weiterhin sind Verbindungselemente vorhanden, die sich von der Flanschplatte aus durch die Deckschicht erstrecken und die sich mit dem zweiten Adapterteil des Adapterelements, an dem die Lüftereinheit befestigt ist, verbinden. Die von der Luftverteilungsschicht abgewandte Seite der Deckschicht, das bedeutet auch diejenige Seite der Deckschicht, die der Seite gegenüber liegt, auf der sich die Flanschplatte befindet, legt eine Positionierungs-Ebene fest, in der eine Sitzgestellfederstruktur verläuft. Diese eine Sitzgestellfederstruktur aufnehmende Positionierungs-Ebene wird auf der der Deckschicht gegenüber liegenden Seite durch Teile des zweiten Adapterteils begrenzt. Dadurch, dass die Flanschplatte zwischen Luftverteilungsschicht und Deckschicht positioniert ist, ist die Flanschplatte zu einer Sitzgestellfederstruktur hin durch die Deckschicht getrennt. Eine unmittelbare Reibung zwischen Flanschplatte und Sitzgestellfederstruktur tritt daher nicht auf. Die Deckschicht wird entsprechend bevorzugt aus einem Vlies oder Filzmaterial erstellt, die, falls erforderlich, eine zusätzliche, weitere luftundurchlässige Schicht oder Beschichtung haben kann. Weiterhin sind keine Verbindungselemente erforderlich, mit denen das Adapterelement unmittelbar an der Sitzgestellfederstruktur eingehakt wird, da die Sitzgestellfederstruktur zwischen den zwei Adapterteilen in einer zwischen diesen festgelegten Positionierungsebene aufgenommen wird. Wesentlich ist auch, dass die Positionierungsebene durch die Ebene der Flanschplatte, die durch die Deckschicht abgedeckt ist, festgelegt wird.

Es ist nicht erforderlich, dass die Flanschplatte zwischen der Luftverteilungsschicht und der Deckschicht befestigt werden muss; vielmehr kann sie unterhalb der Deckschicht schwimmend gelagert werden. Die Flanschplatte kann als Teil des ersten Adapterteils in ihrer Position durch Elemente festgelegt werden, die die Strömungsverbindung zu dem zweiten Adapterteil hin bilden und die sich, ausgehend von der Flanschplatte, durch die Deckschicht hindurch erstrecken. Eine solche schwimmende Lagerung der Flanschplatte erleichtert die Anordnung und Verbindung des ersten Adapterteils mit der Luftverteilungsschicht. Gleichzeitig werden durch eine solche schwimmende Lagerung das zweite Adapterteil und dadurch das Adapterelement von der Luftverteilungsschicht oder einem entsprechenden Luftverteilungselement entkoppelt.

In einer bevorzugten Ausführungsform begrenzt eine Grundplatte als Teil des zweiten Adapterteils die die Sitzgestellfederstruktur aufnehmende Positionierungs-Ebene. Folglich wird dann die Positionierungsebene für die Sitzgestellfederstruktur einerseits durch die Flanschplatte mit der darüber angeordneten Deckschicht und andererseits durch die Grundplatte festgelegt. Wenn das erste Adapterteil mit dem zweiten Adapterteil verbunden wird, wird in dieser Ebene zwischen der Flanschplatte des ersten Adapterteils und der Grundplatte des zweiten Adapterteils die Sitzgestellfederstruktur aufgenommen und dadurch das Adapterelement an der Sitzgestellfederstruktur fixiert.

Das zweite Adapterteil kann eine das Lüftergehäuse aufnehmende Lüfter-Aufnahme haben, so dass in das zweite Adapterteil eine übliche Lüftereinheit, bestehend aus Lüfter und Lüftergehäuse, eingesetzt werden kann. Das zweite Adapterteil besitzt hierzu Öffnungen und Verbindungsteile, die eine Strömungsverbindung zwischen Lüfter und Adapterteil bilden und mit denen die Lüftereinheit an dem zweiten Adapterteil gehalten wird.

Die Verbindungselemente, die sich, von der Flanschplatte des ersten Adapterteils ausgehend, durch die Deckschicht erstrecken und sich mit dem zweiten Adapterteil verbinden, können vorzugsweise durch Verbindungshaken gebildet werden. Es sind aber auch andere Rastelemente an dem ersten Adapterteil und dem zweiten Adapterteil möglich, die rastend ineinander greifen und dadurch das Adapterelement an der Sitzgestellfederstruktur, die in der dafür vorgesehenen Positionierungs-Ebene verläuft, zu halten.

Das erste Adapterteil und/oder das zweite Adapterteil können mindestens einen rohrförmigen Fortsatz aufweisen. Ein solcher Fortsatz, der auch für eine Strömungsverbindung zwischen dem ersten Adapterteil und dem zweiten Adapterteil dient, greift in das jeweils andere Adapterteil ein.

In einer als besonders bevorzugt anzusehenden Ausführungsform weist das eine und/oder das andere Adapterteil mehrere Fortsätze auf, die insbesondere dazu dienen können, durch ihre Anordnung und Ausrichtung eine Zentrierungshilfe an einer Sitzgestellfederstruktur zu bilden. Hierzu sind die Fortsätze so positioniert, dass zwischen den Fortsätzen Teile der Sitzgestellfederstruktur hindurchführen. Die Teile der Federstruktur sollten einen ausreichenden, seitlichen Abstand in Bezug auf die Positionierungsebene zu den Fortsätzen haben, so dass diese nicht die Federstruktur berühren.

Falls mehrere Fortsätze verwendet werden, so kann sich die Strömungsverbindung zwischen Lüfter und Luftverteilungsschicht aus dem Kanalquerschnitt zumindest eines Teils dieser Fortsätze zusammensetzen.

Falls sowohl das erste als auch das zweite Adapterteil solche Fortsätze besitzen, werden diese so ausgeführt, dass sie ineinander greifen. Mit einem solchen Aufbau kann es von Vorteil sein, dass die rohrförmigen Fortsätze die Verbindungselemente aufweisen, die ineinander eingreifen und verrasten, so dass keine zusätzlichen Verbindungselemente erforderlich sind, um das erste Adapterteil und das zweite Adapterteil miteinander zu verbinden. Allerdings können zusätzliche Verbindungselemente an dem ersten Adapterteil und dem zweiten Adapterteil, die ineinander greifen, vorgesehen werden.

Vorzugsweise werden Verbindungselemente an den rohrförmigen Fortsätzen durch umlaufende Rillen, Nuten oder Vorsprünge gebildet.

Um die Flanschplatte zwischen Luftverteilungsschicht und der Deckschicht anzuordnen, insbesondere auch für deren schwimmende Lagerung zwischen Luftverteilungsschicht und Deckschicht, wird die Flanschplatte über einen Einführschlitz in der Deckschicht eingeschoben. Hierdurch wird der Montagevorgang wesentlich vereinfacht, insbesondere dadurch, dass keine zusätzlichen Befestigungsmittel erforderlich sind, um das erste Adapterteil mit der Luftverteilungsschicht zu verbinden.

In einer weiteren Ausgestaltung der Belüftungseinheit wird das Lüftergehäuse als ein Zwischenteil dem zweiten Adapterteil zugeordnet, so dass nur ein Lüfter in das zweite Adapterteil einzusetzen ist; das Zwischenteil und der Lüfter bilden dann die Lüftereinheit.

Weitere Einzelheiten und Merkmale der vorliegenden Erfindung ergeben sich aus der nachfolgenden Beschreibung von Ausführungsbeispielen anhand der Zeichnungen. In der Zeichnung zeigt
- Figur 1: eine perspektivische Ansicht einer Belüftungseinheit für einen Fahrzeugsitz, zum Teil in einer Explosionsdarstellung, mit angedeuteter Ebene einer Sitzgestellfederstruktur,
- Figur 2: eine Ansicht aus Richtung des Sichtpfeils II in Figur 1,
- Figur 3: ein Adapterelement in einer Explosionsdarstellung mit einem ersten Adapterteil und einem zweiten Adapterteil, wie es auch in der Belüftungseinheit der Figur 1 eingesetzt ist,
- Figur 4: das zweite Adapterteil der Figur 3 in einer Explosionsdarstellung mit davon gelöster Lüftereinheit,
- Figur 5: eine Draufsicht auf eine Sitzgestellfederstruktur, aus der die mögliche Anordnung des ersten Adapterteils, wie es die Figur 1 zeigt, ersichtlich ist, und
- Figur 6: eine alternative Ausführungsform des ersten Adapterteils eines Adapterelements.

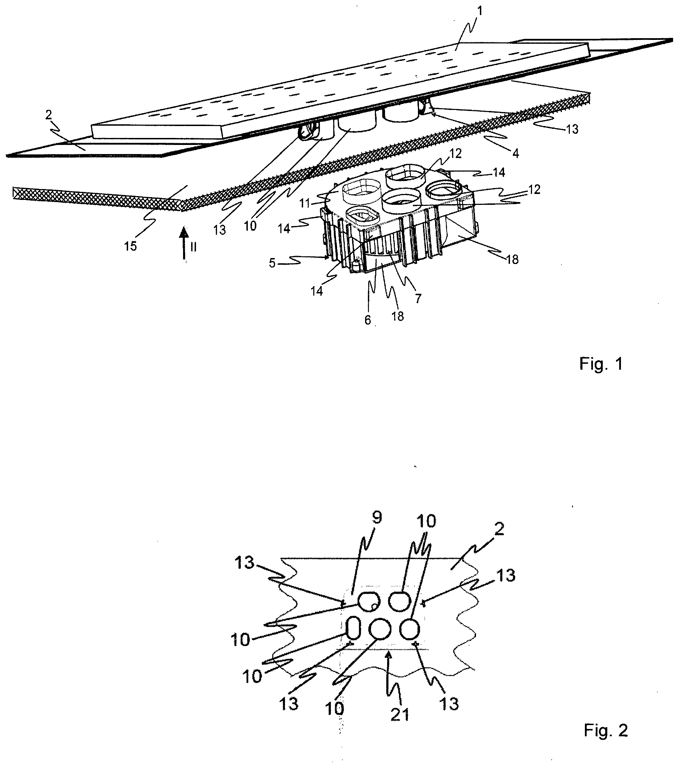

Wie zunächst die Figuren 1 und 2 zeigen, umfasst die Belüftungseinheit gemäß der Erfindung, die zum Belüften eines Fahrzeugsitzes vorgesehen ist, eine Luftverteilungsschicht 1, die auf ihrer einen Seite mit einer Deckschicht 2 abgedeckt ist. Als Luftverteilungsschicht 1 kann eine luftdurchlässige Schicht aus einem Vlies, einem Schaumstoff oder einem Zellkautschuk, aber auch aus einem Abstandsgewirke, eingesetzt werden. Die Deckschicht 2 kann aus einer Folie oder bevorzugt aus einem Vlies oder vliesähnlichen Material bestehen; von Vorteil ist auch, die Deckschicht 2 aus mehreren Lagen zusammenzusetzten, beispielsweise um der Deckschicht 2 luftundurchlässige, weiche oder nachgiebige Eigenschaften zu verleihen.

Mit der Luftverteilungsschicht 1 steht eine Lüftereinheit über ein zweiteiliges Adapterelement 3, das ein erstes Adapterteil 4 und ein zweites Adapterteil 5 umfasst, in Strömungsverbindung.

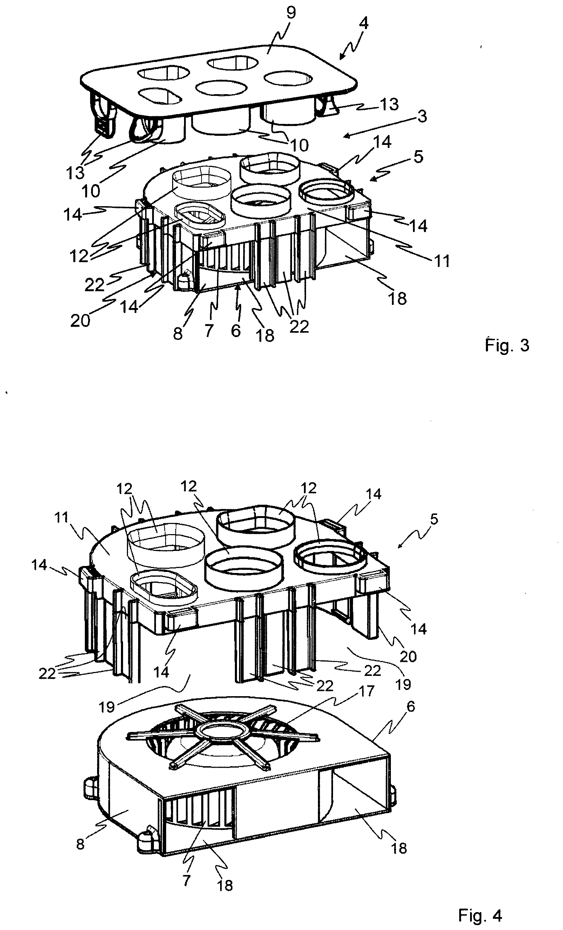

Das Adapterelement 3 mit den zwei Adapterteilen 4, 5 ist in einer vergrößerten Darstellung in Figur 3 gezeigt. In dem zweiten Adapterteil 5 ist eine Lüftereinheit 6 eingesetzt, die in Figur 4 zusammen mit dem zweiten Adapterteil 5, von diesem gelöst, in einer weiteren Explosionsdarstellung gezeigt ist.

Die Lüftereinheit 6, die in Figur 4 gezeigt ist, besitzt einen Lüfter 7 in einem Lüftergehäuse 8.

Das erste Adapterteil 4 des Adapterelements 3 ist, wie insbesondere die Figur 3 zeigt, aus einer Flanschplatte 9 aufgebaut, die im Wesentlichen eine ebene, flache Platte ist. Von der einen Seite dieser Flanschplatte 9 erstrecken sich mehrere rohrförmige Fortsätze 10, die in einem bestimmten Muster über die Ebene der Flanschplatte 9 verteilt angeordnet sind. Vorzugsweise sind diese Fortsätze 10 mit ihrer Rohrachse senkrecht zu der Ebene der Flanschplatte 9 ausgerichtet. In der Ausführungsform, wie sie in den Figuren 1 bis 5 dargestellt ist, umfasst das erste Adapterteil 4 fünf dieser rohrförmigen Fortsätze 10 in zwei Reihen zu je zwei und drei, die darüber hinaus zueinander versetzt sind.

Das zweite Adapterteil 5 des Adapterelements 3 besitzt eine Grundplatte 11, auf deren einen Seite entsprechend dem ersten Adapterteil 4 rohrförmige Fortsätze 12 angeordnet sind, die in ihrer Position den rohrförmigen Fortsätzen 10 des ersten Adapterteils 4 entsprechen. Die Abmessungen dieser rohrförmigen Fortsätze 12 sind so gewählt, dass sie um den Außenumfang der rohrförmigen Fortsätze 10 passen oder in den Innenumfang der rohrförmigen Fortsätze 10 eingesteckt werden können.

Das erste Adapterteil 4 und das zweite Adapterteil 5 des Adapterelements 3 können über ineinander eingreifende Verriegelungselemente miteinander verbunden werden. Diese Verbindungselemente können so ineinander greifen, dass sie miteinander verrasten, wozu entsprechende Rastelemente vorgesehen sind. In dem in den Figuren 1 bis 5 dargestellten Ausführungsbeispiel sind an dem ersten Adapterteil 4 Federarme 13, die an ihren Enden Rastnasen haben können, vorhanden, die in korrespondierende Nuten oder Schlitze 14 an dem zweiten Adapterteil 5 eingreifen. Die Nuten oder Schlitze 14 sind an dem Außenumfang der Grundplatte 11 des zweiten Adapterteils 5 angeordnet. Es ist aber auch vorgesehen, dass die Nuten oder Schlitze 14 dem ersten Adapterteil 4 und die Federarme 13 dem zweiten Adapterteil 5 zugeordnet werden oder ein Teil der Nuten oder Schlitze 14 und ein Teil der Federarme 13 zu dem ersten Adapterteil 4 und ein Teil zu dem zweiten Adapterteil 5 gehören.

Zusätzlich zu den einrastenden Federarmen 13 oder anderen solchen Rastelementen, oder alternativ dazu, können die Verbindungselemente, die einrastend ineinander greifen, den rohrförmigen Fortsätzen 10 des ersten Adapterteils 4 und/oder den rohrförmigen Fortsätzen 12 des zweiten Adapterteils 5 zugeordnet werden, indem an diesen Fortsätzen 10, 12 Rillen oder Nuten, vorzugsweise umlaufende Rillen oder Nuten, ausgebildet werden.

Die in den Figuren 1 bis 6 gezeigten rohrförmigen Fortsätze des ersten Adapterteils 4 und des zweiten Adapterteils 5 des Adapterelements 3 sind in Form und Anzahl beispielhaft und nicht limitierend. Die Ausführungsform der rohrförmigen Fortsätze ist bevorzugt so zu wählen, dass, wenn das erste Adapterteil 4 und das zweite Adapterteil 5 miteinander verbunden werden, diese verdrehsicher verbunden sind und gleichzeitig eine eindeutige Orientierung zueinander festlegen.

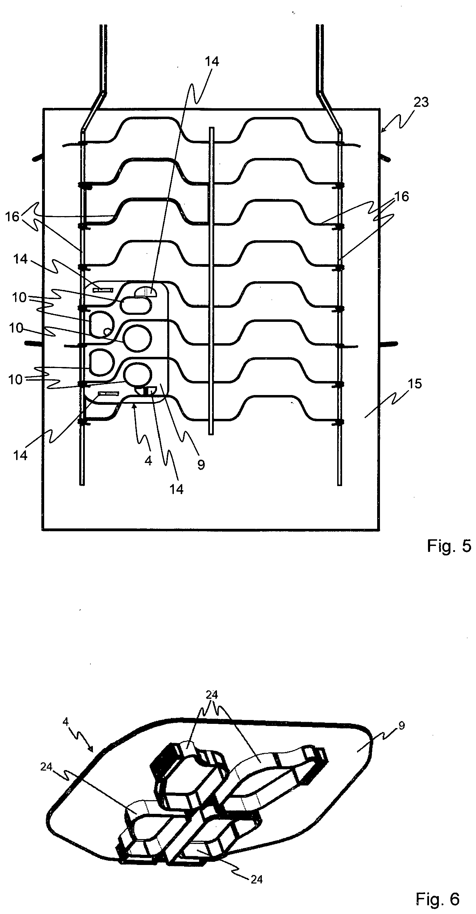

Das Adapterelement 3 wird mit einer Sitzgestellfederstruktur 16, die schematisch in Figur 5 gezeigt ist, verbunden. Hierfür dient die von der Luftverteilungsschicht 1 abgewandte Seite der Deckschicht 2, die von der Flanschplatte 9 hinterlegt ist, als eine Positionierungs-Ebene 15, die in Figur 1 angedeutet ist. Entlang dieser Positionierungs-Ebene 15 verläuft die Sitzgestellfederstruktur 16 und wird zwischen der Flanschplatte 9 des ersten Adapterteils 4 und der Grundplatte 11 des zweiten Adapterteils 5 eingeschlossen; gleichzeitig dienen die rohrförmigen Fortsätze 10 und/oder 12 an dem ersten Adapterteil 4 und dem zweiten Adapterteil 5 dazu, das Adapterelement 3 in der Positionierungs-Ebene 15 an den Federn der Sitzgestellfederstruktur zu zentrieren, indem einzelne Federstäbe oder Federteile in den Zwischenräumen zwischen den rohrförmigen Fortsätzen 10, 12 verlaufen. Diese Anordnung ist schematisch in Figur 5 gezeigt; diese zeigt schematisch eine Sitz- oder Rückenlehnenfläche 23 mit Sitzgestellfederstruktur 16 und eine mögliche Positionierung des ersten Adapterteils 4; es ist anzumerken, dass die Deckschicht 2 in der Figur 5 nicht gezeigt ist.

Wie anhand der Explosionszeichnung der Figur 4 zu sehen ist, ist in der gezeigten Ausführungsform die komplette Lüftereinheit 6, das bedeutet der Lüfter 7 mit dem Lüftergehäuse 8, als Einheit in das zweite Adapterteil 5 eingesetzt. In dieser Anordnung steht eine axiale Gehäuseöffnung 17 mit zumindest einem Teil der Öffnungen der rohrförmigen Fortsätze 12 in Strömungsverbindung, während eine radiale Gehäuseöffnung 18 einer Öffnung 19 in einer Seitenwand 20 des zweiten Adapterteils 5 zugeordnet ist. Durch entsprechende Befestigungs- und Halteelemente an dem zweiten Adapterteil 5 und/oder an dem Lüftergehäuse 8 der Lüftereinheit 6 kann dieses in einfacher Weise in das zweite Adapterteil 5 eingesetzt und auch wieder gelöst werden, falls ein Austausch erforderlich ist.

Es ist aber auch, als eine Alternative zu der gezeigten Ausführungsform, vorgesehen, das Lüftergehäuse 8 als festen Bestandteil in das zweite Adapterteil 5 zu integrieren, so dass die Luftführung zwischen Lüftergehäuse 8, das dann auch als Lüfteradaptergehäuse bezeichnet werden kann, und den Öffnungen entsprechend den rohrförmigen Fortsätzen 12 festgelegt ist. Das in das zweite Adapterteil 5 integrierte Gehäuse bildet dann ein Zwischenteil. Es ist dann nur erforderlich, einen Lüfter in dieses Lüfteradaptergehäuse einzusetzen, so dass die Anordnung von der Form eines Lüftergehäuses einer Lüftereinheit 6 unabhängig ist.

Zusätzliche Stege und Nuten 22, beispielsweise Führungsstege und/oder Führungsnuten, können an dem zweiten Adapterteil 5, bevorzugt an der Außenseite der Grundplatte 11 und an der Außenseite der Gehäusewand 20, vorgesehen werden, die das zweite Adapterteil 5 aussteifen und gegebenenfalls als zusätzliche Führungselemente dienen können.

Ein wesentliches Merkmal der Belüftungseinheit ist dasjenige, dass die Flanschplatte 9, die Teil des ersten Adapterteils 4 ist, vorzugsweise schwimmend zwischen der Luftverteilungsschicht 1 und der Deckschicht 2 gelagert ist, indem sie weder mit der Luftverteilungsschicht 1 noch der Deckschicht 2 verklebt ist. Weiterhin ist von besonderem Vorteil, dass das erste Adapterteil 4 zwischen die Luftverteilungsschicht 1 und die Deckschicht 2 über einen Einführschlitz 21 in der Deckschicht 2, der in Figur 2 angedeutet ist, eingeschoben werden kann. Die rohrförmigen Fortsätze 10, die sich von der Flanschplatte 9 des ersten Adapterteils 4 erstrecken, werden dann durch entsprechende Öffnungen in der Deckschicht 2 hindurchgeführt, so dass die Unterseite der Deckschicht 2 auf der Oberseite der Flanschplatte 9 aufliegt. Auf diese Weise kann das erste Adapterteil 4 ohne weitere Befestigungsmittel mit der Luftverteilungsschicht 1 und der Deckschicht 2 verbunden werden und ist darüber hinaus schwimmend gelagert und zentriert. Gleichzeitig bildet die Deckschicht 2 eine Anlagefläche für die Sitzgestellfederstruktur 16, die daran anliegt, wenn das erste Adapterteil 4 mit dem zweiten Adapterteil 5 verbunden wird. Gegebenenfalls kann der Einführschlitz 21 durch einen Dichtstreifen, beispielsweise durch einen Klebebandstreifen, der allerdings nicht in den Figuren dargestellt ist, verschlossen werden. Auch ist es möglich, die Kanten des Einführschlitzes 21 miteinander zu verkleben.

Während in den Ausführungsformen der Figuren 1 bis 5 das Adapterelement 3 fünf rohrförmige Fortsätze 10, mit entsprechenden Fortsätzen 12 an der Grundplatte 11 des zweiten Adapterteils 5, aufweist, ist in Figur 6 eine alternative Ausführungsform mit vier rohrförmigen Fortsätzen 24 gezeigt, um zu verdeutlichen, dass die Anzahl und die Form der rohrförmigen Fortsätze im Rahmen des Erfindungsgedankens variieren können. Zu dem ersten Adapterteil 4, das in Figur 6 dargestellt ist, wird ein zweites Adapterteil 5 des Adapterelements 3 entsprechend angepasst, wie dies die Figuren 1 bis 5 verdeutlichen.

## Patentansprüche

1. Belüftungseinheit für einen Fahrzeugsitz mit einer Luftverteilungsschicht (1), die zumindest auf der einen Seite durch eine Deckschicht (2) abgedeckt ist, und mit einer Lüftereinheit, die einen Lüfter (7) und ein Lüftergehäuse (8) umfasst, die durch ein zweiteiliges Adapterelement (3), mit einem ersten Adapterteil (4) und einem zweiten Adapterteil (5), gehalten ist und über dieses Adapterelement (3) mit der Luftverteilungsschicht (1) in Strömungsverbindung steht, wobei Mittel vorgesehen sind, mit denen das Adapterelement (3) an Teilen einer Sitzgestellfederstruktur (16) verbindbar ist, **dadurch gekennzeichnet, dass** das erste Adapterteil (4) des Adapterelements (3) eine Flanschplatte (9), die zwischen der Luftverteilungsschicht (1) und der Deckschicht (2) angeordnet ist, und Verbindungselemente (13), die sich von der Flanschplatte (9) aus durch die Deckschicht (2) erstrecken und sich mit dem zweiten Adapterteil (5) des Adapterelements (3), an dem die Lüftereinheit (6) befestigt ist, verbinden, aufweist, wobei die von der Luftverteilungsschicht (1) abgewandte Seite der Deckschicht (2) eine die Sitzgestellfederstruktur (16) aufnehmende Positionierungs-Ebene (15) festlegt, wobei die Positionierungs-Ebene (15) auf der der Deckschicht (2) gegenüber liegenden Seite durch Teile (11) des zweiten Adapterteils (5) begrenzt ist.

2. Belüftungseinheit nach Anspruch 1, **dadurch gekennzeichnet, dass** eine Grundplatte (11) des zweiten Adapterteils (5) die die Sitzgestellfederstruktur (16) aufnehmende Positionierungs-Ebene (15) begrenzt.

3. Belüftungseinheit nach Anspruch 1 oder 2, **dadurch gekennzeichnet, dass** das zweite Adapterteil (5) eine das Lüftergehäuse (8) aufnehmende Lüfter-Aufnahme aufweist.

4. Belüftungseinheit nach einem der Ansprüche 1 bis 3, **dadurch gekennzeichnet, dass** die Verbindungselemente (13) durch Verbindungshaken gebildet sind.

5. Belüftungseinheit nach einem der Ansprüche 1 bis 4, **dadurch gekennzeichnet, dass** das erste Adapterteil (4) und/oder das zweite Adapterteil (5) mindestens einen rohrförmigen Fortsatz (10; 12) aufweist, der jeweils in das andere Adapterteil (5, 4) eingreift.

6. Belüftungseinheit nach Anspruch 5, **dadurch gekennzeichnet, dass** der/die rohrförmige(n) Fortsatz/Fortsätze (10, 12) die Verbindungselemente aufweist/aufweisen, die ineinander eingreifend verrasten.

7. Belüftungseinheit nach Anspruch 6, **dadurch gekennzeichnet, dass** die Verbindungselemente durch umlaufende Rillen, Nuten oder Vorsprünge gebildet sind.

8. Belüftungseinheit nach Anspruch 2, **dadurch gekennzeichnet dass** die Flanschplatte (9) schwimmend zwischen der Luftverteilungsschicht (1) und der Deckschicht (2) gelagert ist.

9. Belüftungseinheit nach einem der Ansprüche 1 bis 8, **dadurch gekennzeichnet dass** die Flanschplatte (9) über einen Einführschlitz (21) in der Deckschicht (2) zwischen der Luftverteilungsschicht (1) und der Deckschicht (2) eingeschoben ist.

10. Belüftungseinheit nach einem der Ansprüche 1 bis 9, **dadurch gekennzeichnet, dass** das Lüftergehäuse (8) ein Zwischenteil in dem zweiten Adapterteil (5) bildet, in das der Lüfter (7) entnehmbar eingesetzt ist.

11. Belüftungseinheit nach einem der Ansprüche 5 bis 7, **dadurch gekennzeichnet, dass** mehrere Fortsätze (10, 12) vorgesehen sind, die eine Zentrierungshilfe an einer Sitzgestellfederstruktur (16) bilden.

## Claims

1. A ventilation unit for a vehicle seat having an air distribution layer (1) that is covered at least on the one side by a cover layer (2), and having a fan unit, comprising a fan (7) and a fan housing (8), which is held by a two-part adapter element (3) with a first adapter part (4) and a second adapter part (5) and is in a flow connection with the air distribution layer (1) via this adapter element (3), wherein means are provided for connecting the adapter element (3) to parts of a seat frame spring structure (16), **characterized in that** the first adapter part (4) of the adapter element (3) has a flange plate (9) , which is arranged between the air distribution layer (1) and the cover layer (2), and connection elements (13) that extend, starting at the flange plate (9), through the cover layer (2) and connect to the second adapter part (5) of the adapter element (3), where the fan unit (6) is attached, wherein the side of the cover layer (2) facing away from the air distribution layer (1) defines a positioning plane (15) that receives a seat frame spring structure (16), wherein the positioning plane (15) is delimited on the side opposite the cover layer (2) by parts (11) of the second adapter part (5).

2. Ventilation unit according to claim 1, **characterized in that** a base plate (11) of the second adapter part (5) delimits the positioning plane (15) that receives the seat frame spring structure (16).

3. Ventilation unit according to any one of claims 1 and 2, **characterized in that** the second adapter part (5) has a fan receptacle that receives the fan housing (8).

4. Ventilation unit according to any one of claims 1 to 3, **characterized in that** the connection elements (13) are formed by connection hooks.

5. Ventilation unit according to any one of claims 1 to 4, **characterized in that** at least one of the first adapter part (4) and the second adapter part (5) has at least one tube-shaped extension (10; 12) that engages with the respective other adapter part (5, 4).

6. Ventilation unit according to claim 5, **characterized in that** the tube-shaped extension (10, 12) has connection elements that lock as they engage with each other.

7. Ventilation unit according to claim 6, **characterized in that** the connection elements are formed by circumferential elements selected from the group consisting of notches, grooves or protrusions.

8. Ventilation unit according to claim 2, **characterized in that** the flange plate (9) is supported floating between the air distribution layer (1) and the cover layer (2).

9. Ventilation unit according to any one of claims 1 to 8, **characterized in that** the flange plate (9) is inserted via an insertion slot (21) into the cover layer (2) between the air distribution layer (1) and the cover layer (2).

10. Ventilation unit according to any one of claims 1 to 9, **characterized in that** the fan housing (8) forms an interim part in the second adapter part (5) where the fan (7) can be placed removably.

11. Ventilation unit according to any one of claims 5 to 7, **characterized in that** multiple extensions (10, 12) are provided that form a centering aid at the seat frame spring structure (16).

## Revendications

1. Unité de ventilation pour un siège de véhicule avec une couche de répartition de l'air (1), recouverte au moins d'un côté par une couche couvrante (2) et avec une unité de ventilateur comprenant un ventilateur (7) et un boîtier de ventilateur (8) et maintenue par un élément adaptateur (3) en deux blocs avec une première pièce d'adaptateur (4) et une seconde pièce d'adaptateur (5) et communication d'écoulement avec la couche de répartition de l'air (1) via cet élément adaptateur (3), dans laquelle des moyens permettant de raccorder l'élément adaptateur (3) aux pièces du châssis du siège (16) sont prévus, **caractérisée en ce que** la première pièce d'adaptateur (4) de l'élément adaptateur (3) présente une plaque de bride (9), placée entre la couche de répartition de l'air (1) et la couche couvrante (2), et des éléments de raccordement (13) s'étendant de la plaque de bride (9) à travers la couche couvrante (2) et se raccordant à la seconde pièce d'adaptateur (5) de l'élément adaptateur (3) sur lequel l'unité de ventilateur (6) est fixée, le côté de la couche couvrante (2) opposé à la couche de répartition de l'air (1) déterminant un niveau de positionnement (15) accueillant la structure des ressorts du châssis du siège (16), le niveau de positionnement (15) étant délimité, sur le côté opposé à la couche couvrante (2), par les pièces (11) de la seconde pièce d'adaptateur (5).

2. Unité de ventilation selon la revendication 1, **caractérisée en ce qu'**une plaque de base (11) de la seconde pièce d'adaptateur (5) délimite le niveau de positionnement (15) accueillant la structure des ressorts du châssis du siège (16).

3. Unité de ventilation selon la revendication 1 ou 2, **caractérisée en ce que** la seconde pièce d'adaptateur (5) présente une cavité de ventilateur accueillant le boîtier de ventilateur (8).

4. Unité de ventilation selon l'une quelconque des revendications 1 à 3, **caractérisée en ce que** les éléments de raccordement (13) sont équipés de crochets de raccordement.

5. Unité de ventilation selon l'une quelconque des revendications 1 à 4, **caractérisée en ce que** la première pièce d'adaptateur (4) et/ou la seconde pièce d'adaptateur (5) présente au moins un prolongement en forme de tube (10 ; 12) qui s'insère dans l'autre pièce d'adaptateur (5, 4).

6. Unité de ventilation selon la revendication 5, **caractérisée en ce que** le(s) prolongement(s) en forme de tube (10, 12) présente(nt) les éléments de raccordement qui s'insèrent les uns dans les autres.

7. Unité de ventilation selon la revendication 6, **caractérisée en ce que** les éléments de raccordement sont dotés de cannelures, de rainures ou de saillies.

8. Unité de ventilation selon la revendication 2, **caractérisée en ce que** la plaque de bride (9) flotte entre la couche de répartition de l'air (1) et la couche couvrante (2).

9. Unité de ventilation selon l'une quelconque des revendications 1 à 8, **caractérisée en ce que** la plaque de bride (9) est enfoncée via une encoche d'insertion (21) dans la couche couvrante (2) entre la couche de répartition de l'air (1) et la couche couvrante (2).

10. Unité de ventilation selon l'une quelconque des revendications 1 à 9, **caractérisée en ce que** le boîtier de ventilateur (8) forme une pièce intermédiaire dans la seconde pièce d'adaptateur (5) dans laquelle le ventilateur (7) est inséré de manière amovible.

11. Unité de ventilation selon l'une quelconque des revendications 5 à 7, **caractérisée en ce que** plusieurs prolongements (10, 12) formant une aide au centrage sur la structure des ressorts du châssis du siège (16) sont prévus.
